(19) Europäisches Patentamt
European Patent Office
Office européen des brevets

(11) **EP 3 455 935 B1**

(12) **EUROPEAN PATENT SPECIFICATION**

(45) Date of publication and mention
of the grant of the patent:
**15.07.2020 Bulletin 2020/29**

(21) Application number: **17734458.7**

(22) Date of filing: **10.05.2017**

(51) Int Cl.:
***H02S 50/00*** *(2014.01)*

(86) International application number:
**PCT/IB2017/052735**

(87) International publication number:
**WO 2017/195132 (16.11.2017 Gazette 2017/46)**

(54) **METHOD FOR MONITORING THE STATE OF EFFICIENCY OF A PHOTOVOLTAIC SYSTEM**

VERFAHREN ZUR ÜBERWACHUNG DES EFFIZIENZZUSTANDS EINER FOTOVOLTAIKANLAGE

PROCÉDÉ DE SURVEILLANCE DE L'ÉTAT D'EFFICACITÉ D'UN SYSTÈME PHOTOVOLTAÏQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.05.2016 IT UA20163338**

(43) Date of publication of application:
**20.03.2019 Bulletin 2019/12**

(73) Proprietor: **Esapro S.r.l.**
**35010 San Pietro in Gu (PD) (IT)**

(72) Inventors:
• **CECCHIN, Alessandro**
**35010 San Pietro in Gu' (PD) (IT)**
• **GOSMIN, Manuel**
**36031 Dueville (VI) (IT)**

(74) Representative: **Bonini, Ercole**
**Studio Bonini Srl**
**Corso Fogazzaro, 8**
**36100 Vicenza (IT)**

(56) References cited:
**EP-A2- 2 399 177          DE-B3-102014 107 417
US-A1- 2015 088 440**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention regards a method for monitoring the state of efficiency of a photovoltaic system.

It is known that photovoltaic modules that form photovoltaic power stations for the production of electrical energy are subject to efficiency drop due to various factors. The documents EP2 399 177A and DE 10 2014 107417 B are closely related prior art documents. One of the causes of efficiency drop is due to the spontaneous deterioration of the modules that occurs progressively over time and it is due, for example, to the poor quality of the materials used, to the poor maintenance or to an erroneous assembly.

Another type of causes instead directly lies in the state of the modules which may feature breakages, cracks and fissures which interrupt the correct flow of the electrons and cause the decrease of efficiency of the modules and thus of the system as a whole.

Also the different humidity conditions of the environment in which the modules are installed imply an efficiency variation of the system which is particularly sensitive should the modules also feature the aforementioned cracks, breakages and fissures, given that the penetration of humidity into the modules further hinders the electronic flow.

Thus, the need of providing a valid instrument capable of enabling monitoring systems and constantly monitoring the efficiency thereof, so as to be able to schedule potential maintenance interventions, is clear.

There is currently known a monitoring method that utilizes an indicator called Performance Ratio **PR** defined by the ratio between the energy **E** produced by the system in a time interval and the Energy Producibility in the same time interval, wherein the producibility is provided by the rated power **Pnom.** of the system multiplied by the solar radiation **G** recorded in the aforementioned time interval and divided by the radiation value in standard conditions **Rstc** according to the following relation:

$$PR = E \, / \, P_{nom.} \, x \, G/R_{stc}$$

This indicator has the limit of not considering the impact of the temperature on the system which, as known, causes the efficiency of the modules to drop as it increases.

Another known monitoring method improves the establishment of the Performance Ratio **PR** correcting the value thereof according to the temperature value that is measured on the rear of a module of the system.

The limit of this method lies in the fact that the temperature measurement carried out on only one module could be insignificant and provide unreliable results of the Performance Ratio **PR** considering that a standard system having a 1MW rated power comprises 4500 modules.

Furthermore, given that the choice of the module on which the measurement is to be carried out is random, should the temperature measurement probe be inadvertently positioned on a faulty module, the measured value would definitely be erroneous and thus entail the establishment of a definitely erroneous Performance Ratio **PR.**

Thus, these methods do not sufficiently consider the different environmental parameters of the areas where the systems are installed and thus have the further limitation lying in that they do not allow mutually comparing systems installed in geographic areas subject to different climates.

Besides this, the known methods are not capable of indicating the type of potential malfunctions present in the modules that form the system.

The aim of the present invention is to overcome the aforementioned limits.

In particular, an object of the present invention is to provide a method for establishing a parameter that indicates the performance of a photovoltaic system in a specific time interval, according to the rated characteristics of the system and the environmental conditions of the place where it is installed.

Another object lies in that the method of the invention provides for organising - in a Cartesian plane - a plurality of values of the performance parameters obtained during an extended period of reading, so as to obtain a chart representing the performance variation of the system during the period of reading.

A further object lies in that the method of the invention enables obtaining the aforementioned charts having a differently configured profile as a function of the presence or absence of malfunctions in the modules that form the system. The aforementioned objects are attained by a method for monitoring the state of efficiency of photovoltaic systems according to the main claim to which reference is made.

The dependent claims describe other characteristics of the method of the invention.

Advantageously, by the interpretation of the profiles of the charts that are obtained it is possible to establish whether the modules of the photovoltaic system reveal malfunctions and the type of such possible malfunctions.

Furthermore, advantageously, the analysis of the profile of the charts of mutually different systems, obtained over the same periods of time, enables mutually comparing them, even though installed in climatically different areas. The mentioned objects and advantages are attained by a method according to the invention which is herein described with reference to the attached drawings wherein:

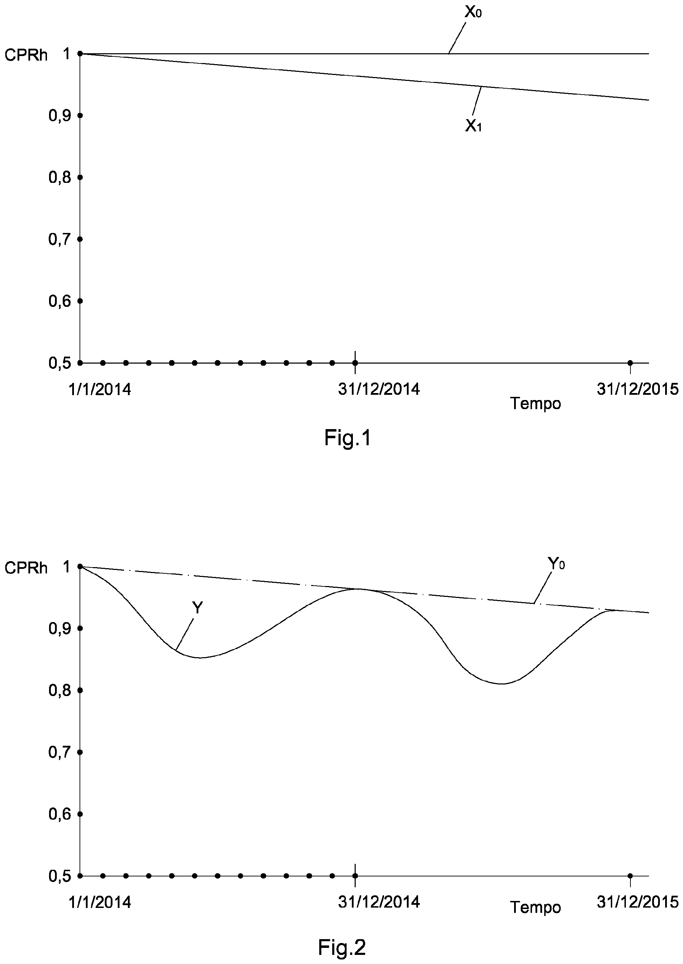

- figures 1 to 3 show different charts of the variation over time of the performance parameter that is defined for the modules of a photovoltaic system through the method of the invention.

The method of the invention obtains the monitoring of the state of efficiency of a photovoltaic system defining a parameter that is indicated as the name of Performance Ratio of the system **CPRh** which is read in a pre-established time interval and over an extended period of time.

This enables drawing - in a Cartesian plane - the chart regarding the system's performance deterioration over time.

The method comprises a plurality of operations that provide as a preliminary operation the measurement of the value of the radiation **R** measured in Watt/m$^2$, of the ambient temperature **Ta** measured in °C of the place where the photovoltaic system is installed and of the value of the power **P** measured in Watts and produced by the system, carrying out a plurality of instantaneous readings over a period of reading **I** which preferably but not necessarily corresponds to at least one calendar year.

The choice of an at least one year period of reading enables measuring the value of the radiation **R**, of the ambient temperature **Ta** and of the produced power **P** and controlling the seasonal variations of such values so as to enable verifying the differences between the summer season, the winter season and the intermediate seasons.

In particular as regards the measurements, radiation **R** is measured by means of a pyranometer and the power **P** produced by the system is measured by means of a wattmeter with instantaneous readings carried out every minute. As regards the ambient temperature **Ta** instead, it is measured by means of a thermometer with instantaneous readings carried out every 5 minutes.

Such reading frequencies may also be different from the indicated ones. According to the invention, the method provides for a subsequent <u>definition</u> operation, over the aforementioned period of reading **I**, of a plurality of time intervals **i,** each of which has a duration which is preferably but not necessarily:

$$10' \leq \mathbf{i} \leq 180'$$

Within such values, the preferably pre-selected time interval **i** is 60', the selection of different time intervals however being possible.

Thus, the method provides for an operation of <u>refining</u> the previously measured instantaneous values of radiation **R**, ambient temperature **Ta** and produced power **P**, which provides for the exclusion of the first and the last 10-percentiles of the aforementioned read instantaneous values, before <u>calculating</u> the values of the mean radiation **R̄**, the mean ambient temperature **T̄a** and the mean produced power **P̄**.

In particular, the value of each of the aforementioned mean values is obtained considering the instantaneous values of radiation **R**, ambient temperature **Ta** and produced power **P** that were previously read during each time interval **i.**

In addition, for each of the aforementioned time intervals **i** there is <u>calculated</u> the value of the radiation **G** generated by the radiation **R** that is defined by the value of the mean radiation **R̄** multiplied by the duration of the time interval **i** according to the following relation:

$$\mathbf{G} = \overline{\mathbf{R}} \; \mathbf{x} \; \mathbf{i} \quad (\text{Watt x time/m}^2).$$

At this point, the method provides for <u>selecting</u> - from among the time intervals **i** - only those in which the values of the radiation **G** are greater than 200 Wxh/m$^2$ and the values of the standard deviation σ of the values of the radiation **R** are lower than 10% of the aforementioned radiation **G**.

Preferably but not necessarily, from among the time intervals **i** there are selected the time intervals, indicated with symbols **is**, in which the value of the radiation **G** amounts to 600 Wxh/m$^2$ and the value of the standard deviation σ of the values of the radiation **R** amount to 5% of such value of the radiation **G**. This choice enables defining the standard reference conditions and evaluating the state of efficiency of the system solely taking into account the situations where it operates in full regime.

At this point, the aforementioned Performance Ratio of the system **CPRh** in each of the selected time intervals is can be calculated using the following relation:

$$\mathbf{CPRh} = \mathbf{E}/\mathbf{E}_{\text{expected}}$$

wherein:

- **E** is the value of the energy produced by the system in the selected time interval **is** defined according to the following relation:

$$E = \overline{P} \times is \text{ (W} \times \text{time)};$$

- **Eexpected** is the value of the energy expected by the system in the selected time interval **is**.

The Performance Ratio **CPRh** is thus an adimensional coefficient whose value is comprised between value 0 and value 1.

The method of the invention provides for that the value of the energy expected by the system **Eexpected** is obtained from the following relation:

$$Eexpected = Pnom. \times G/Rstc \times [1\text{-}Ct \times (Tmod. - Tstc)] \times eff.inv. \times Cimp.$$

in which the values that appear are:

- **Pnom.**, which is the rated value of the power of the photovoltaic system;
- **G**, which is the value of the radiation calculated in the selected time interval **is**;
- **Rstc**, which is the value of the radiation in standard conditions;
- **Tstc**, which is the value of the ambient temperature in standard conditions;
- **eff.inv.**, which is the rated value of the efficiency of the inverter at the measured value of the mean produced power $\overline{P}$;
- **Ct**, which is the rated value of the temperature coefficient of the photovoltaic modules that form the system;
- **Cimp.**, which is the design value of the constant voltage drop of the system and it is provided by the system designer;
- **Tmod.**, which is the value of the expected mean temperature of the modules which is calculated in each of said selected time intervals **is** by applying the following relation:

$$Tmod. = \overline{Ta} + G \times (NOCT - A)/B$$

wherein:

- $\overline{Ta}$ is the value of the mean ambient temperature in the selected time interval **is**;
- **G** is the value of the radiation in the selected time interval **is**;
- **NOCT** is the value of the operating temperature under rated conditions of the photovoltaic modules that form the system and it is provided by the manufacturer of the photovoltaic modules;
- **A** is a first coefficient corresponding to the ambient temperature value assumed to determine the rated value **NOCT** of the photovoltaic modules and it is provided by the manufacturer of the photovoltaic modules;
- **B** is a second coefficient corresponding to the radiation value assumed to determine the rated value **NOCT** of the photovoltaic modules and it is provided by the manufacturer of the photovoltaic modules.

It should be observed that from among the terms contained in the relations that provide the value of the energy expected by the system **Eexpected** and the expected mean temperature of the modules **Tmod.,** some regard standard value parameters that are usually assumed for designing photovoltaic systems while others are specific parameters and regard the physical and constructive features of the photovoltaic modules and they are provided by the manufacturer and/or the designer.

In particular, the so-called identification values of the photovoltaic modules and the system provided by the manufacturer regard:

- the rated value **Pnom.** of the power that the photovoltaic system is capable of providing;
- the rated value of the inverter efficiency **eff.inv.** that is established through charts provided by the manufacturer of the inverter at the measured value of the mean produced power $\overline{P}$;
- the temperature coefficient value of the photovoltaic modules **Ct** that is also provided by the manufacturer of the photovoltaic modules;
- the value of the constant voltage drop of the system **Cimp.** that is provided by the designer of the system;
- the values of the first coefficient **A** and the second coefficient **B** that are provided by the manufacturer of the photovoltaic modules and are used by the manufacturer to establish the rated value **NOCT** of the photovoltaic modules.

On the other hand, as regards the so-called standard value parameters that are usually assumed, they regard:

- the radiation value in standard conditions **Rstc**;
- the temperature value in standard conditions **Tstc.**

Preferably but not necessarily, the radiation value in standard conditions **Rstc** is assumed at a value equivalent to 1000 W/m$^2$ and the value of the temperature in standard conditions **Tstc** is assumed at a value equivalent to 25°C.

As regards the coefficients **A** and **B** instead, in order to establish the value **NOCT** of the photovoltaic modules, preferably but not necessarily the first coefficient **A** is assumed at a value equivalent to 20°C, while the second coefficient **B** is assumed at a value equivalent to 800 W/m$^2$.

Obviously, the values of the parameters listed above may be different from the values that were preselected herein and may be varied depending on the changed law requirements or different design and/or construction choices of the systems.

At this point, it is clear that the values of the Performance Ratio **CPRh** that are calculated take into account the environmental conditions of the place of installation of the system and the calculation data are refined and refer to optimal standard conditions.

Thus, the values of the Performance Ratio **CPRh** of systems installed in different areas, as long as obtained during the same time intervals, can be compared to each other.

Having the availability of several values of the Performance Ratio **CPRh** calculated - as previously explained - for a period **I** preferably but not necessarily having the duration of at least one calendar year, there can be defined a chart that illustrates the variation of the Performance Ratio **CPRh** during the aforementioned period **I** and thus, substantially, examining the performance variation of the system over the period of observation.

For such purpose, the method provides for providing a Cartesian plane having selected time intervals **is** in abscissa arranged one after the other in time sequence over the entire period of reading **I** and the values of the Performance Ratio **CPRh** in ordinate.

Thus, in the aforementioned Cartesian plane there is marked the chart that represents the performance deterioration of the system and it is formed by a plurality of points each of which has one of the aforementioned selected time intervals **Is** as abscissa and the Performance Ratio **CPRh** relative to the aforementioned selected time interval **Is** as ordinate.

This enables obtaining, depending on the conditions of the photovoltaic system in question, charts of the type represented in figs. 1 to 3, each of which represents a state of a system operating efficiency.

In particular, an efficiency chart indicated with **X1** and represented in fig. 1 constituted by a line with inclination facing towards the abscissa axis indicates a photovoltaic system that reveals a linear efficiency drop that increases as the inclination of the line **X1** increases with respect to an ideal zero efficiency drop situation represented by the horizontal line **X0** having a constant Performance Ratio of value **CPRh = 1**.

As concerns the inclination angular values of the line **X1** maintained within a few degrees, the efficiency deterioration can be deemed physiological while as concerns greater inclination angular values, efficiency deterioration should be deemed pathological and due, for example, to the poor quality of the materials used, or poor maintenance or even assembly defects.

Should the efficiency chart take the shape of the curve **Y** represented in fig. 2, it indicates an efficiency drop of the system, due to the presence of the so-called "Hot Spot" modules, which are due to the presence of cracks, fractures or breakages of the modules, at which there occurs the interruption of the flow of electrons and thus an efficiency drop of the energy that is produced.

It should be observed that the reduction of the **CPRh** value especially occurs at the subsidence of the curve that - in seasonal terms - corresponds to the hottest months of the year during which there occurs, as known, an efficiency drop of the system due to the increase of ambient temperature.

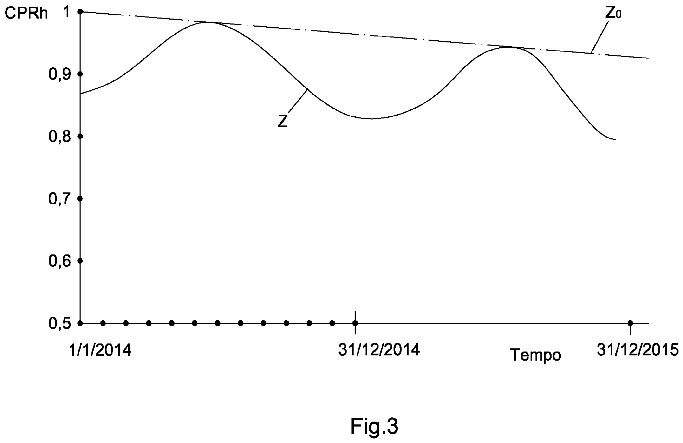

Should the efficiency chart take the shape of the curve **Z** represented in fig. 3, it indicates an efficiency drop of the system due to the presence of the so-called "Pid" (Potential Induced Degradation) which are due to the presence of micro-cracks on the panels that absorb humidity and lead to the efficiency drop of the modules.

As a matter of fact, it should be observed that the reduction of efficiency of the modules is detected in the coldest months of the year when the ambient humidity increases and penetrates into the micro-cracks causing the efficiency drop of the modules.

Obviously, the degradation of the photovoltaic modules due to the presence of hot spots shown in the chart **Y** of fig. 2 can be superimposed to the degradation due to the presence of the Pid shown in the chart **Z** of fig. 3 as well as the degradation over time, spontaneous or induced, represented by the linear trend **X** that is observed in fig. 1.

For example, in the charts of figs. 2 and 3 regarding a period of two years it is observed that curves **Y** and **Z** respectively show a trend converging towards the abscissa axis outlined by the dash-dot lines respectively **Y1** and **Z1** that show that the efficiency drop due to the presence of hot spots and Pid adds up to the one due to linear degradation, spontaneous or caused by assembly errors or poor quality of the material or poor maintenance, represented in the chart of fig. 1.

Given that the values of the Performance Ratio **CPRh** are calculated as previously described and thus with reference to the standard operating conditions and considering the environmental conditions, the charts that they provide enable mutually comparing the systems installed in different locations and evaluating the degradation thereof.

Thus, it is clear that the method of the invention attains all pre-set objects.

Firstly, the method enables monitoring the efficiency of the photovoltaic system considering the different environmental parameters and thus much more accurately with respect to similar methods of the prior art.

This also enables mutually comparing systems installed in geographic areas with different climates given that for each system the **CPRh** values are obtained with reference to environmental temperature and radiation parameters of the location of installation of the system.

It has also been observed that the operation of refining the data that are read enables defining the standard reference conditions and thus evaluating the state of efficiency of the system solely taking into account the situations where it operates in full regime.

Furthermore, it has also been observed that the method of the invention enables not only evaluating the efficiency variation of the photovoltaic system over time but also identifying the factors that affect such efficiency drop and establishing if they are spontaneous or caused by other factors.

Lastly, the method enables maintaining the operation of a photovoltaic system under control through data processing operations that are carried out from a remote position with respect to the location of installation of the system and where the temperature, radiation and power reading instruments are arranged.

**Claims**

1. Method for monitoring the state of efficiency of a photovoltaic system comprising a plurality of photovoltaic modules electrically connected to each other and to one or more inverters, said method comprising the following operations:

   - measuring the values of the radiation **R** and the ambient temperature **Ta** in the area where the photovoltaic system is installed, by carrying out a plurality of instantaneous readings over a period of reading **I**;
   - measuring the value of the power **P** produced by the photovoltaic system, by carrying out a plurality of instantaneous readings over a period of reading **I**,

   **characterised in that** it also comprises the following operations:

   - defining over said period of reading I a plurality of time intervals **i**, one after the other, each having a duration:

$$10' \leq i \leq 180'$$

   - calculating for each of said time intervals i the values of mean radiation $\overline{R}$, mean ambient temperature $\overline{Ta}$ and mean produced power $\overline{P}$, the value of each of said mean values being obtained considering the instantaneous values of radiation **R**, ambient temperature **Ta** and produced power **P** read during each of said time intervals **i**;
   - calculating the value of the radiation **G** for each of said time intervals **i** which is defined by the value of the mean radiation $\overline{R}$ multiplied by the duration of the time interval **i** according to the following relation:

$$G = \overline{R} \times i$$

   - selecting from among said time intervals **i** the time intervals **is** in which the values of the radiation **G** are greater than 200 Wxh/m$^2$ and the values of the standard deviation $\sigma$ of the values of the radiation **R** are lower than 10% of the aforementioned radiation **G**;
   - calculating the **CPRh** value of the Performance Ratio of the system in each of said selected time intervals **is** by applying the following relation:

$$CPRh = E/E_{expected}$$

wherein:

- **E** is the value of the energy produced by the system in the selected time interval **is** defined according to the following relation:

$$E = \overline{P} \times is$$

- **Eexpected** is the value of the energy expected by the system in the selected time interval **is**;
- preparing a Cartesian plane having the selected time intervals **is** arranged one after the other, according to a time sequence covering the entire period of reading **I**, in abscissa, and the values of the Performance Ratio **CPRh** in ordinate;
- drawing in said Cartesian plane the chart (**X1**, **Y**, **Z**) showing the performance deterioration of the system, said chart being formed by a plurality of dots each of which has one of said selected time intervals **is** as the abscissa and the Performance Ratio **CPRh** regarding the aforementioned selected time interval **is** as the ordinate;
- comparing the performance deterioration chart (**X1**, **Y**, **Z**) of the system thus obtained with the theoretical performance chart (**X0**) of a system having a unitary Performance Ratio **CPRh**, constant over the entire period of reading **I**.

2. Method according to claim 1, **characterised in that** in each of said selected time intervals **is** the value of said energy expected by the system **Eexpected** is obtained from the following relation:

$$Eexpected = Pnom. \times G/Rstc \times [1\text{-}Ct \times (Tmod. - Tstc)] \times eff.inv. \times Cimp.$$

wherein:

- **Pnom.** is the rated value of the power of the photovoltaic system;
- **G** is the value of the radiation calculated in the selected time interval **is**;
- **Rstc** is the value of the radiation under standard conditions;
- **Tstc** is the value of the ambient temperature under standard conditions;
- **eff.inv.** is the rated value of the efficiency of the inverter at the value measured of the mean produced power $\overline{P}$;
- **Ct** is the rated value of the temperature coefficient of the photovoltaic modules that form the system;
- **Cimp.** is the design value of the constant voltage drop of the system;
- **Tmod.** is the value of the expected mean temperature of the modules which is calculated in each of said selected time intervals **is** by applying the following relation:

$$Tmod. = \overline{Ta} + G \times (NOCT - A)/B$$

wherein:

- $\overline{Ta}$ is the value of the mean ambient temperature in the selected time interval **is**;
- **G** is the value of the radiation in the selected time interval is;
- **NOCT** is the value of the operating temperature under rated conditions of the photovoltaic modules that form the system;
- **A** is a first coefficient corresponding to the ambient temperature value assumed to determine the rated value **NOCT** of the photovoltaic modules;
- **B** is a second coefficient corresponding to the radiation value assumed to determine the rated value **NOCT** of the photovoltaic modules.

3. Method according to any one of the preceding claims, **characterised in that** it comprises an operation of refining the read instantaneous values of radiation **R**, temperature **Ta** and produced power **P** which provides for excluding the first and the last 10-percentiles of said read instantaneous values before calculating the mean values.

4. Method according to claim 2 or 3, **characterised in that** said value **Rstc** of the radiation under standard conditions is 1000 W/m$^2$.

5. Method according to any one of claims 2 to 4, **characterised in that** said value **Tstc** of the ambient temperature under standard conditions is 25°C.

6. Method according to any one of claims 2 to 5, **characterised in that** said first coefficient **A** corresponds to the value of 20°C and said coefficient **B** corresponds to the value of 800 W/m$^2$.

7. Method according to any one of the preceding claims, **characterised in that** said instantaneous readings of the values of the produced power **P** are spaced from each other by one minute.

8. Method according to any one of the preceding claims, **characterised in that** said instantaneous readings of the values of the radiation **R** are spaced from each other by one minute.

9. Method according to any one of the preceding claims, **characterised in that** said instantaneous readings of the values of the temperature **Ta** are spaced from each other by five minutes.

10. Method according to any one of the preceding claims, **characterised in that** said time intervals **i**, **is** are 60-minute time intervals.

11. Method according to any one of the preceding claims, **characterised in that** in said selected time intervals **is** said value of the radiation **G** is 600 Wxh/m$^2$ and said value of the standard deviation $\sigma$ is 5% of the value of said radiation **G.**

12. Method according to any one of the preceding claims, **characterised in that** said period of reading I lasts at least one year.

**Patentansprüche**

1. Verfahren zur Überwachung des Wirkungsgrades eines Photovoltaiksystems, umfassend eine Vielzahl von miteinander und mit einem oder mehreren Wechselrichtern elektrisch verbundenen Photovoltaikmodulen, wobei das Verfahren folgende Vorgänge umfasst:

   - Messen der Werte der Strahlung **R** und der Umgebungstemperatur **Ta** in dem Bereich, in dem das Photovoltaiksystem installiert ist, durch Ausführen einer Vielzahl von Momentanablesungen über einen Ablesezeitraum I;
   - Messen des Wertes der vom Photovoltaiksystem erzeugten Leistung **P**, durch Ausführen einer Vielzahl von Momentanablesungen über einen Ablesezeitraum I,

   **dadurch gekennzeichnet, dass** es auch folgende Vorgänge umfasst:

   - Definieren über diesen Ablesezeitraum I einer Vielzahl von Zeitintervallen **i** nacheinander, jeweils mit einer Dauer von:

$$10' \leq \mathbf{i} \leq 180'$$

   - Berechnen, für jedes der Zeitintervalle **i,** der Werte der mittleren Strahlung $\overline{\mathbf{R}}$**,** der mittleren Umgebungstemperatur $\overline{\mathbf{Ta}}$ und der mittleren erzeugten Leistung $\overline{\mathbf{P}}$, wobei der Wert jeder der Mittelwerte unter Berücksichtigung der Momentanwerte der Strahlung **R**, der Umgebungstemperatur **Ta** und der erzeugten Leistung **P** erhalten wird, die während jedes der Zeitintervalle **i** abgelesen werden;
   - Berechnen des Wertes der Strahlung **G** für jedes der Zeitintervalle **i,** der durch den Wert der mittleren Strahlung $\overline{\mathbf{R}}$ multipliziert mit der Dauer des Zeitintervalls i gemäß folgender Beziehung definiert ist:

$$\mathbf{G} = \overline{\mathbf{R}} \times \mathbf{i}$$

   - Auswählen, aus den Zeitintervallen **i,** der Zeitintervalle **is**, in denen die Werte der Strahlung **G** größer als 200 Wxh/m$^2$ und die Werte der Standardabweichung $\sigma$ der Werte der Strahlung **R** kleiner als 10% der zuvor genannten Strahlung **G** sind;
   - Berechnen des **CPRh**-Wertes des Leistungsverhältnisses des Systems in jedem der ausgewählten Zeitintervalle **is** unter Anwendung der folgenden Beziehung:

$$CPRh = E/E_{expected}$$

wobei:

- **E** der Wert der vom System in dem ausgewählten Zeitintervall **is** erzeugten Energie ist, der gemäß folgender Beziehung definiert wird:

$$E = \overline{P} \times is$$

- **Eexpected** der Wert der Energie ist, die vom System in dem ausgewählten Zeitintervall **is** erwartet wird;
- Vorbereiten einer kartesischen Ebene, in der die ausgewählten Zeitintervalle **is** nacheinander gemäß einer Zeitsequenz angeordnet sind, die die gesamte Leseperiode **I** auf der Abszisse und die Werte des Leistungsverhältnisses **CPRh** auf der Ordinate abdeckt;
- Zeichnen, auf der kartesischen Ebene, des Diagramms (**X1**, **Y**, **Z**), der die Leistungsverschlechterung des Systems zeigt, wobei das Diagramm durch eine Vielzahl von Punkten gebildet wird, von denen jeder eines der ausgewählten Zeitintervalle **is** als Abszisse und das Leistungsverhältnis **CPRh** bezüglich des oben erwähnten ausgewählten Zeitintervalls **is** als Ordinate aufweist;
- Vergleichen des Leistungsverschlechterungsdiagramms (**X1**, **Y**, **Z**) des so erhaltenen Systems mit dem theoretischen Leistungsdiagramm (**X0**) eines Systems aufweisend ein einheitliches Leistungsverhältnis **CPRh**, das über den gesamten Lesezeitraum **I** konstant ist.

2. Verfahren nach Anspruch 1, **dadurch gekennzeichnet, dass** in jedem der ausgewählten Zeitintervalle **is** der vom System **Eexpected** erwartete Energiewert aus der folgenden Beziehung erhalten wird:

$$E_{expected} = P_{nom.} \times G/R_{stc} \times [1\text{-}C_t \times (T_{mod.} - T_{stc})] \times eff._{inv.} \times C_{imp.}$$

wobei:

- **Pnom.** der Nennwert der Leistung des Photovoltaiksystems ist;
- **G** der Wert der im ausgewählten Zeitintervall **is** berechneten Strahlung ist;
- **Rstc** der Wert der Strahlung unter Standardbedingungen ist;
- **Tstc** der Wert der Umgebungstemperatur unter Standardbedingungen ist;
- **eff.inv.** der Nennwert des Wirkungsgrades des Wechselrichters beim gemessenen Wert der mittleren erzeugten Leistung $\overline{P}$ ist;
- **Ct** der Nennwert des Temperaturkoeffizienten der Photovoltaikmodule ist, die das System bilden;
- **Cimp.** der Auslegungswert des konstanten Spannungsabfalls des Systems ist;
- **Tmod.** der Wert der erwarteten Mitteltemperatur der Module ist, der in jedem der ausgewählten Zeitintervalle **is** berechnet wird, indem folgende Beziehung angewendet wird:

$$T_{mod.} = \overline{T_a} + G \times (NOCT - A)/B$$

wobei:

- $\overline{T_a}$ der Wert der mittleren Umgebungstemperatur in dem ausgewählten Zeitintervall **is** ist;
- **G** der Wert der Strahlung im ausgewählten Zeitintervall **is** ist;
- **NOCT** der Wert der Betriebstemperatur unter Nennbedingungen der Photovoltaikmodule ist, die das System bilden;
- **A** ein erster dem Umgebungstemperaturwert entsprechender Koeffizient ist, der zur Bestimmung des Nennwerts **NOCT** der Photovoltaikmodule angenommen wird;
- **B** ein zweiter dem Strahlungswert entsprechender Koeffizient ist, der zur Bestimmung des Nennwerts **NOCT** der Photovoltaikmodule angenommen wird.

3. Verfahren nach irgendeinem der vorgehenden Ansprüche, **dadurch gekennzeichnet, dass** es einen Vorgang zum Verfeinern der gelesenen Momentanwerte der Strahlung **R**, der Temperatur **Ta** und der erzeugten Leistung **P** umfasst, welches vorsieht die ersten und die letzten 10-Perzentile der gelesenen Momentanwerte vor der Berechnung der Mittelwerte auszuschließen.

4. Verfahren nach Anspruch 2 oder 3, **dadurch gekennzeichnet, dass** der Wert **Rstc** der Strahlung unter Standardbedingungen 1000 W/m$^2$ beträgt.

5. Verfahren nach irgendeinem der Ansprüche von 2 bis 4, **dadurch gekennzeichnet, dass** der Wert **Tstc** der Umgebungstemperatur unter Standardbedingungen 25°C beträgt.

6. Verfahren nach irgendeinem der Ansprüche von 2 bis 5, **dadurch gekennzeichnet, dass** der erste Koeffizient **A** dem Wert von 20°C entspricht und der Koeffizient **B** dem Wert von 800 W/m$^2$ entspricht.

7. Verfahren nach irgendeinem der vorgehenden Ansprüche, **dadurch gekennzeichnet, dass** die Momentanablesungen der Werte der erzeugten Leistung **P** um eine Minute voneinander beabstandet sind.

8. Verfahren nach irgendeinem der vorgehenden Ansprüche, **dadurch gekennzeichnet, dass** die Momentanablesungen der Werte der Strahlung **R** um eine Minute voneinander beabstandet sind.

9. Verfahren nach irgendeinem der vorgehenden Ansprüche, **dadurch gekennzeichnet, dass** die Momentanablesungen der Werte der Temperatur **Ta** um fünf Minuten voneinander beabstandet sind.

10. Verfahren nach irgendeinem der vorgehenden Ansprüche, **dadurch gekennzeichnet, dass** die Zeitintervalle **i**, **is** Zeitintervalle von 60 Minuten sind.

11. Verfahren nach irgendeinem der vorgehenden Ansprüche, **dadurch gekennzeichnet, dass** in den ausgewählten Zeitintervallen **is** der Wert der Strahlung **G** 600 Wxh/m$^2$ beträgt und der Wert der Standardabweichung σ 5% des Wertes der Strahlung **G** beträgt.

12. Verfahren nach irgendeinem der vorgehenden Ansprüche, **dadurch gekennzeichnet, dass** die Lesezeit **I** mindestens ein Jahr dauert.


## Revendications

1. Procédé pour surveiller l'état d'efficacité d'un système photovoltaïque comprenant une pluralité de modules photovoltaïques électriquement connectés les uns aux autres et à un ou plusieurs onduleurs, ledit procédé comprenant les opérations suivantes:

   - mesurer les valeurs du rayonnement **R** et de la température ambiante **Ta** dans la zone où le système photovoltaïque est installé, en effectuant une pluralité de lectures instantanées sur une période de lecture **I**;
   - mesurer la valeur de la puissance **P** produite par le système photovoltaïque, en effectuant une pluralité de lectures instantanées sur une période de lecture **I**,

   **caractérisé en ce qu'**il comprend également les opérations suivantes:

   - définir sur ladite période de lecture **I** une pluralité d'intervalles de temps **i**, l'un après l'autre, ayant chacun une durée:

$$10' \leq i \leq 180'$$

   - calculer pour chacun desdits intervalles de temps **i** les valeurs de rayonnement moyen $\overline{R}$, de température ambiante moyenne $\overline{Ta}$ et de puissance produite moyenne $\overline{P}$, la valeur de chacune desdites valeurs moyennes étant obtenue en tenant compte des valeurs instantanées de rayonnement **R**, de température ambiante **Ta** et de puissance produite **P** lues pendant chacun desdits intervalles de temps **i**;
   - calculer la valeur du rayonnement **G** pour chacun desdits intervalles de temps **i** qui est défini par la valeur du

rayonnement moyen $\overline{R}$ multipliée par la durée de l'intervalle de temps i selon la relation suivante:

$$G = \overline{R} \text{ x } i$$

- sélectionner parmi lesdits intervalles de temps **i** les intervalles de temps **is** dans lesquels les valeurs du rayonnement **G** sont supérieures à 200 Wxh/m$^2$ et les valeurs de l'écart-type $\sigma$ des valeurs du rayonnement **R** sont inférieures à 10% du rayonnement **G** mentionné ci-dessus;
- calculer la valeur **CPRh** du Rapport de Performance du système dans chacun desdits intervalles de temps sélectionnés **is** en appliquant la relation suivante:

$$CPRh = E/E_{expected}$$

dans lequel:

- **E** est la valeur de l'énergie produite par le système dans l'intervalle de temps sélectionné **is** défini selon relation suivante:

$$E = \overline{P} \text{ x } is$$

- **Eexpected** est la valeur de l'énergie attendue par le système dans l'intervalle de temps sélectionné **is**;
- préparer un plan cartésien ayant les intervalles de temps sélectionnés **is** agencés l'un après l'autre, selon une séquence de temps couvrant toute la période de lecture **I**, en abscisse, et les valeurs du Rapport de Performance **CPRh** en ordonnée;
- dessiner dans ledit plan cartésien le graphique (**X1**, **Y**, **Z**) montrant la détérioration de performance du système, ledit graphique étant formé par une pluralité de points dont chacun a l'un desdits intervalles de temps sélectionnés **is** comme abscisse et le Rapport de Performance **CPRh** concernant l'intervalle de temps sélectionné **is** mentionné ci-dessus comme ordonnée;
- comparer le diagramme de détérioration de performance (**X1**, **Y**, **Z**) du système ainsi obtenu avec le graphique de performance théorique (**X0**) d'un système ayant un Rapport de Performance unitaire **CPRh**, constant sur toute la période de lecture **I**.

2. Procédé selon la revendication 1, **caractérisé en ce que** dans chacun desdits intervalles de temps sélectionnés **is** la valeur de ladite énergie attendue par le système **Eexpected** est obtenue à partir de la relation suivante:

$$E_{expected} = P_{nom.} \text{ x } G/R_{stc} \text{ x } [1\text{-}C_t \text{ x } (T_{mod.} - T_{stc})] \text{ x } eff._{inv.} \text{ x } C_{imp.}$$

dans lequel:

- **Pnom.** est la valeur nominale de la puissance du système photovoltaïque;
- **G** est la valeur du rayonnement calculée dans l'intervalle de temps sélectionné **is**;
- **Rstc** est la valeur du rayonnement dans des conditions standard;
- **Tstc** est la valeur de la température ambiante dans des conditions standard;
- **eff.inv.** est la valeur nominale de l'efficacité de l'onduleur au niveau de la valeur mesurée de la puissance moyenne produite $\overline{P}$;
- **Ct** est la valeur nominale du coefficient de température des modules photovoltaïques qui forment le système;
- **Cimp**. est la valeur de conception de la chute de tension constante du système;
- **Tmod.** est la valeur de la température moyenne attendue des modules qui est calculée dans chacun desdits intervalles de temps sélectionnés **is** en appliquant la relation suivante:

$$T_{mod.} = \overline{T_a} + G \text{ x } (NOCT - A)/B$$

dans lequel:

- $\overline{Ta}$ est la valeur de la température ambiante moyenne dans l'intervalle de temps sélectionné **is**;
- **G** est la valeur du rayonnement dans l'intervalle de temps sélectionné **is**;
- **NOCT** est la valeur de la température de fonctionnement dans des conditions nominales des modules photovoltaïques qui forment le système;
- **A** est un premier coefficient correspondant à la valeur de température ambiante supposée pour déterminer la valeur nominale **NOCT** des modules photovoltaïques;
- **B** est un deuxième coefficient correspondant à la valeur de rayonnement supposée pour déterminer la valeur nominale **NOCT** des modules photovoltaïques.

3. Procédé selon l'une quelconque des revendications précédentes, **caractérisé en ce qu'**il comprend une opération consistant à affiner les valeurs instantanées lues de rayonnement **R**, de température **Ta** et de puissance produite **P**, ce qui permet d'exclure les 10 premiers et derniers centiles desdites valeurs instantanées lues avant de calculer les valeurs moyennes.

4. Procédé selon la revendication 2 ou 3, **caractérisé en ce que** ladite valeur **Rstc** du rayonnement dans des conditions standard est de 1000 W/m$^2$.

5. Procédé selon l'une quelconque des revendications 2 à 4, **caractérisé en ce que** ladite valeur **Tstc** de la température ambiante dans des conditions standard est de 25°C.

6. Procédé selon l'une quelconque des revendications 2 à 5, **caractérisé en ce que** ledit premier coefficient **A** correspond à la valeur de 20°C et ledit coefficient **B** correspond à la valeur de 800 W/m$^2$.

7. Procédé selon l'une quelconque des revendications précédentes, **caractérisé en ce que** lesdites lectures instantanées des valeurs de la puissance produite **P** sont espacées l'une de l'autre d'une minute.

8. Procédé selon l'une quelconque des revendications précédentes, **caractérisé en ce que** lesdites lectures instantanées des valeurs du rayonnement **R** sont espacées l'une de l'autre d'une minute.

9. Procédé selon l'une quelconque des revendications précédentes, **caractérisé en ce que** lesdites lectures instantanées des valeurs de la température **Ta** sont espacées l'une de l'autre de cinq minutes.

10. Procédé selon l'une quelconque des revendications précédentes, **caractérisé en ce que** lesdits intervalles de temps **i**, **is** sont des intervalles de temps de 60 minutes.

11. Procédé selon l'une quelconque des revendications précédentes, **caractérisé en ce que** dans lesdits intervalles de temps sélectionnés **is** ladite valeur du rayonnement **G** est de 600 Wxh/m$^2$ et ladite valeur de l'écart-type $\sigma$ est de 5% de la valeur dudit rayonnement **G**.

12. Procédé selon l'une quelconque des revendications précédentes, **caractérisé en ce que** ladite période de lecture **I** dure au moins une année.

Fig.1

Fig.2

Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2399177 A

- DE 102014107417 B